# EUROPEAN PATENT APPLICATION

(11) **EP 2 290 601 A1**
(43) Date of publication of application: **02.03.2011**
(21) Application number: 09290637.9
(22) Date of filing: 24.08.2009
(51) Int. Cl.: G06Q 20/00

(54) **Method and system for secure mobile payment**

(71) Applicant: Afone, 49100 Angers (FR)
(72) Inventor: Fournier, Philip, 49100 Angers (FR); Horlait, Eric, 80000 Amiens (FR)
(74) Representative: Thinat, Michel

(57) **Abstract**

For processing a payment relating to a transaction between a debtor and a creditor, the method comprises:
- a transaction displaying step (106) for displaying at least an amount of payment;
- a transaction authorising step (304) for transmitting an authorisation message between a first node associated with the payment service provider system and a second node associated with a debtor instrument on a second network wherein each node is separately and securely identified by a node identifying code, said authorisation message communicating an authorisation code; and
- a transaction verifying step (204) for transferring a response message on a first network from a payment service provider system to a creditor instrument when the payment service provider system receives at least the authorisation code in association with a debtor identifying code.

## Description

The present invention relates generally to the field of electronic payment or any other currency transfer. More precisely, the invention relates to network secure transactions.

Electronic payment is already known, for example by smart card or any credit card. When a smart card is used for example on a POS or an ATM, an electronic communication is established between the smart card and the POS or the ATM aiming at securing the transaction by identifying the cardholder. In this case, another electronic communication may be established with a central server in order to validate the transaction. When a credit card is used for example on the Internet, an electronic communication is established between a client device and a server computer for communicating the number of the credit card. Electronic payments using a mobile telephone have been recently envisaged.

Document US 7,562,813 discloses a system and method for activating telephone-based payment instrument. An external wireless device, which is not a payment instrument, is provided for transmitting wireless signalling representing the account identifier of a user for thereafter transmitting the account identifier from the external device to a payment instrument module.

Document US 2008/0126251 discloses a system and method for utilizing a portable network device to initiate and authorize a payment transaction. The portable network device obtains a merchant ID code identifying the merchant's payee account for authorizing a payment service system to execute the payment transaction from the payer account to the merchant's payee account.

Document US 2006/0265339 discloses a secure virtual point of service for 3G wireless networks. The secure virtual point of service create two encryption keys, one for the buyer and one for the merchant, both used by the merchant to encrypt a message. The message is decrypted by the buyer after having received the merchant's encryption key for releasing payment if the buyer is satisfied with the packet.

Document US 6,976,011 discloses a process for making remote payments for the purchase of goods and/or a service through a mobile radiotelephone, and the corresponding system and mobile radiotelephone. A communication is established between the mobile radiotelephone and a sales server for sending a purchase request, receiving data about the price of the goods and/or services and making a purchase decision.

Network communication of information for identifying an account of a party to the other party, poses a problem of protection in order to prevent reuse of said information for other transactions, which could arise by network tampering.

Network communication of an encryption key of a party to the other party, poses a problem of protection in order to prevent reuse of said encryption key for other transactions, which could arise by network tampering.

Direct electronic communication between the parties, poses a problem of protection in order to prevent intrusion of a forger party in the communication (e.g. man in the middle attack).

The present invention provides a method for processing a payment relating to a transaction between a debtor and a creditor, comprising a transaction displaying step for displaying at least an amount of payment and a transaction verifying step for transferring a response message between a creditor instrument and a payment service provider system on a first network, **characterised in that** it comprises:
- a transaction authorising step for transmitting an authorisation message between a first node associated with the payment service provider system and a second node associated with a debtor instrument on a second network wherein each node is separately and securely identified by a node identifying code, said authorisation message communicating an authorisation code; and in that:
- the response message is transferred in the transaction verifying step from the payment service provider system to the creditor instrument when the payment service provider system receives at least the authorisation code in association with a debtor identifying code.

The node identifying code associated with the debtor instrument, which is used on the second network for transmitting an authorisation code, securely identifies the debtor instrument as means of payment. The reception of the authorising code in association with a debtor identifying code securely identifies the user of the means of payment as the rightful owner of the means of payment.

Particularly, the transaction displaying step is executed before the authorising step for further displaying a transaction identifying code, to be followed by the transaction authorising step wherein the authorisation message is transmitted from the second node to the first node and the authorisation code includes the transaction identifying code.

More particularly, the authorisation code is generated by the payment service provider system after having received the amount of payment.

Particularly also, the transaction authorising step is executed before the displaying step and the authorisation message is transmitted from the first node to the second node.

More particularly, the authorisation code is generated by the payment service provider system after having received a request from the second node.

Advantageously, the authorisation code is communicated in the authorisation message independently of the amount of payment.

For presenting to the users who are the creditor and the debtor, a dialog scheme similar to the one implemented by a conventional credit card, the authorisation code and the debtor identifying code are entered in the debtor instrument or in the creditor instrument by the debtor being informed of the amount of payment.

Advantageously also, accessibility to a creditor account is based on first information transmission by the first network, accessibility to a debtor account is based on second information transmission by the second network, and association between the creditor account and the debtor account is made in said first node of the second network by correlating said first and second information.

Preferably, the first and second networks are operated by different operators and/or by different technological means.

A particular advantage is provided by generating the authorisation code so as to be associated with a localisation of the creditor instrument and with a localisation of the debtor instrument and to be validated when the two localisations are in a same neighbourhood. In that way, many transactions can be managed with short authorisation codes when two transactions having a same authorisation code are in different neighbourhoods. Furthermore, the constraint on the debtor to be in the neighbourhood of the creditor enhances the security.

More particularly, the localisation of the debtor instrument is determined by the second network.

According to different preferred implementations of the invention, the debtor instrument comprises a mobile telephone, the creditor instrument comprises a point of sale or a Web server for displaying the amount of payment by the Internet.

These and other objects and advantages of the present invention will become apparent after considering the following detailed specification of preferred embodiments in conjunction with the accompanying drawings wherein:
- FIG. 1 is a schematic view of a system implementing the invention;
- FIG. 2 is a flowchart of a first embodiment of the method according to the invention;
- FIGS. 3 and 4 are flowcharts of a second embodiment of the method according to the invention;
- FIG. 5 is a flowchart of a third embodiment of the method according to the invention.

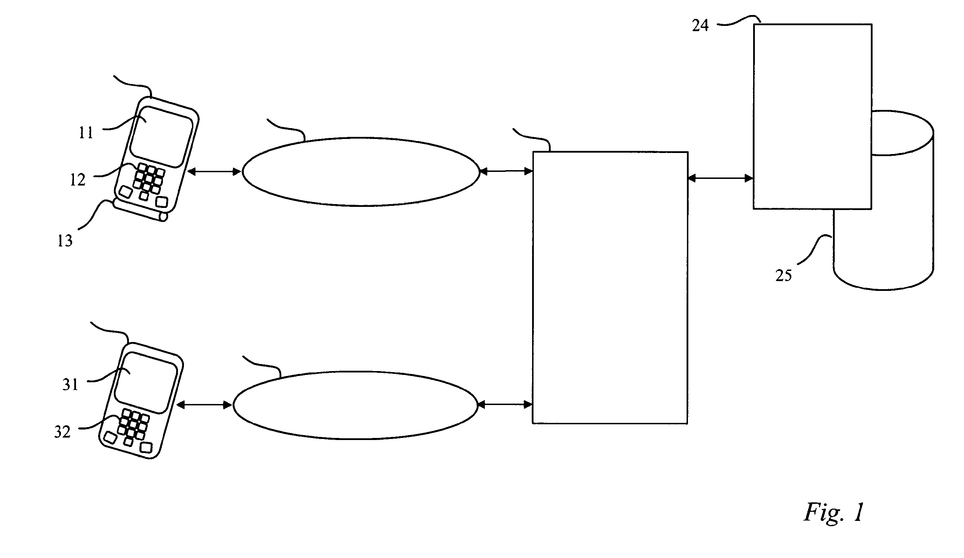

With reference to FIG. 1, a system for processing a payment between a debtor and a creditor is shown.

An instrument 10 is attributed to the creditor and an instrument 30 is attributed to the debtor. The instruments 10 and 30 are electronic communication devices commonly comprising a processor, a memory, a screen, a keypad and a network interface circuit.

The creditor instrument 10 is for example a Point Of Sale (POS) terminal equipment, which is located in a shop or in hospitality industry premises pertaining to a hotel, a restaurant, a casino, a catering provider or a resort or any other such place. The creditor is in this case the business person who carries on the shop or the hospitality industry and the debtor is the client. An other possible example of creditor instrument 10 is an Automated Teller Machine (ATM), the creditor is the entity dispensing money and the debtor is an entity customer receiving banknotes. More generally, the creditor is the person owning an account to be credited and the debtor is the person owning an account to be debited in any financial transaction.

The creditor instrument 10 is connected to a clearing centre server 20 via a secure link on a data network 21. The clearing centre server 20 implements usual banking functions like transactions handling, management of stop payments, clearing and so on.

The creditor instrument 10 is provided with a screen 11, a keypad 12 and a printer 13. The screen 11 and the keypad 12 can be implemented in a same physical device like a touch screen. The creditor instrument 10 can also be provided with other peripherals like a smart card reader, a remote human interface or a cheque reader. Other peripherals are not represented on Fig. 1 because they are not necessary for implementing the invention as it will be seen below.

Usually, for processing a payment relating to a transaction between a debtor and a creditor, a payment application is selected in the creditor instrument 10, manually or automatically by introducing a credit card in the creditor instrument 10. The selected application is the payment application, which is associated with the credit card or more generally with the payment means owned by the debtor. In France, CB rules impose a payment application by default to be ready in the creditor instrument. The acronym CB is for the French expression "Carte Bancaire" designating a credit card. Another payment application can be selected, for example after introduction of a smart card in the creditor instrument 10 by the debtor. The payment application selection can also be remotely realized for example in a cash register, which is linked with the creditor instrument.

The amount of payment is entered on the keypad 12 and displayed on the screen 11. At the same time, the debtor is identified, most of the time by validation of a secret code number, which the debtor enters on the keypad 12 for declaring her or his agreement on the amount of payment, for example in the case of a smart card.

The creditor instrument 10 is arranged for determining, in function of information given by the payment means of the debtor and the amount of payment, if the transaction is to be immediately accepted or rejected, or if an authorization is required from the clearing centre. In this later case, a request is sent the server 20 via the secure link on the network 21. The response of the server 20 allows or not to accept the transaction.

Whichever is the result of the transaction, accepted or turned down, the transaction including the result is stored in the creditor instrument and in the smart card in case of the payment means of the debtor being a smart card. The result of the transaction is printed by the printer 13 on a voucher for the creditor and at least on a voucher for the debtor.

Eventually, the transaction is collected immediately on line or later offline in the clearing centre for effective accounting and clearing.

Within the framework of processing the payment, the creditor instrument 10 is arranged in respect with security standards, for example specified in Payment Card Industry (PCI) and PIN Entry Device (PED) recommendations. A strict use of security standards makes the creditor instrument secure against a considerable quantity of possible aggressions.

In comparison with the usual processing of a transaction, the system of the invention does not need any credit card for handling a payment, thanks to the debtor instrument 30 now presented.

The network interface circuit of at least the debtor instrument 30, comprises a hardware unique identifier. The unique identifier is for instance the Media Access Control (MAC) address when the network technology is based on Ethernet, WiFi and other 802.xx IEEE standards, ATM, FDDI and many other computer networking protocols on physical and data link layers. The unique identifier is for instance the Electronic Serial Number (ESN) on AMPS, TDMA and CDMA mobile phone networks, which is stored in the mobile phone. The unique identifier is for instance the International Mobile Subscriber Identity (IMSI) number on GSM and many WCDMA comprising UMTS mobile phone networks, which is stored in a Subscriber Identity Module (SIM) card.

A first node is associated on a network 23 with a payment service provider system comprising the clearing centre server 20. The payment service provider system may further comprise a back-office accounts management server 24 in association with a database 25. The two networks 21 and 23 are different and separated for carrying out the interchanges, which are helpful for authenticating the debtor and for validating and recording the transaction.

The back-office accounts management server 24 in association with a database 25 is provided for administering many debtors and creditors and for computerising their accounts. The counts can be managed by a bank, a payment operator or any other authorised entity in the form of current account, of prepaid account or any other suited form of account.

The first node, which is associated with the payment service provider system, is securely identified by a unique node identifying code. In particular, the network 23 is a cellular network for mobile phones wherein the node identifying code is a call number associated with a MAC address of the server 20 or of the server 24 connected to a core network or associated with an ESN or an IMSI of one of the servers 20, 24 connected to an access network of the cellular network.

A second node is associated on the network 23 with the debtor instrument 30. In particular, the debtor instrument 30 is a mobile phone having a call number NAC (acronym of the French expression Numéro d'Appel Client), which is used as a unique node identifying code.

One or more customers having each a personal debtor instrument 30, are registered in the database 25 by creating an account for each customer who is a potential debtor in a future transaction. The creation of an account needs some administrative work for depositing funds, taking financial guarantees and so on. The customer provides the database 25 with some information comprising her or his call number NAC. When registration of the customer is complete, the server 24 transmits a personal debtor or Customer Identifying Code (CIC) to the customer. The customer keeps the debtor identifying code CIC secret.

One or more merchants having each a personal creditor instrument 10, are registered in the database 25 by creating an account for each merchant who is a potential creditor in a future transaction. The merchant is identified in the database 25 by a contract number named NCA for example. When registration of the merchant is complete, the server 24 transmits a personal creditor code or Contract Identification Approval (CIA) to the customer. The customer keeps the creditor identifying code CIA secret. A computer program for running an application named for example AFX, is loaded in the creditor instrument 10.

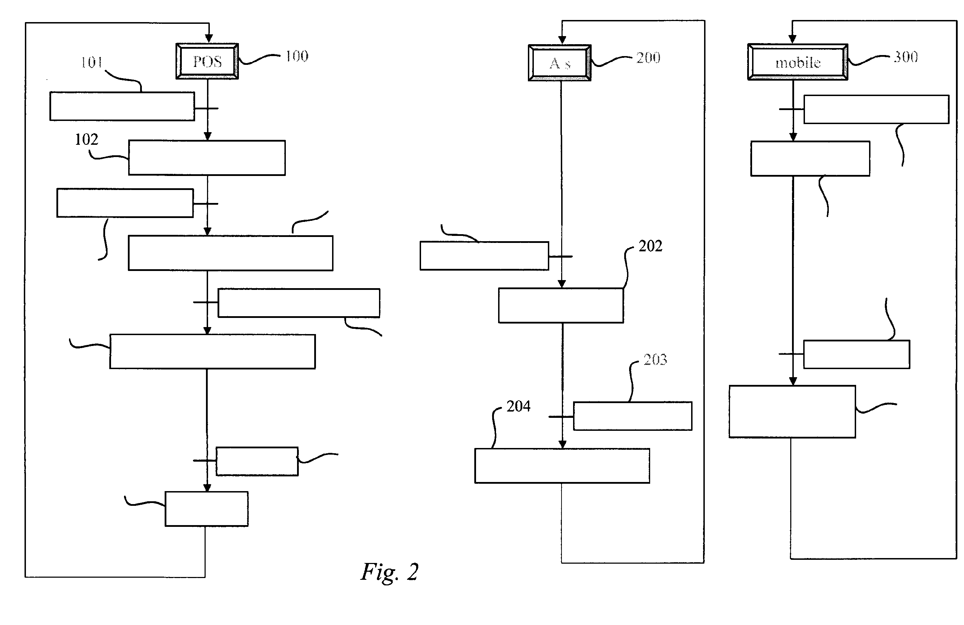

The application AFX executes computer readable instructions for implementing steps of the method for which a first embodiment is now described with reference to Fig. 2.

From an initial step 100 wherein the creditor instrument, for example on a POS, is idle on the watch, a transition 101 is validated when the application AFX is selected for example by a person typing specific key or keys on the keypad 12 or touching a specific symbol on the screen 11 or by any other way. Typically, the person is a merchant using the creditor instrument when a customer wants to pay goods or a service.

Step 102 is activated by validation of transition 101 for displaying an AFX user interface requesting to enter an amount of payment and possibly the contract number NCA. From step 102, a transition 103 is validated when the application AFX receives the contract number NCA and the amount of payment.

Step 104 is activated by validation of transition 103 for transmitting the contract number NCA and the amount of payment to the payment service provider system, more particularly to server 20.

Steps sequence 100 to 104 presented above are exemplary only. Those skilled in the art will recognise that other actions can be sequenced for providing the server with the NCA and the amount of payment. For example, the AFX application can be run by simply entering the NCA on the keypad 12 or the NCA can be memorized in the creditor instrument so as to be available by simply selecting the AFX application. In the case of a POS, the creditor instrument can be connected to the cash register in order to receive automatically the amount of payment. The AFX can be running by default on the creditor instrument so far as no other application is selected, without use of specifically selecting the AFX application in this case.

From an initial step 200 wherein the clearing centre server monitors incoming messages, a transition 201 is validated when the server 20 receives the NCA and the amount of payment.

Step 202 is activated by validation of transition 201 for generating an authorisation code, which is here a number of transaction NTR. By generating the authorisation code after having received the amount of payment, the payment service provider system stores the amount of payment in a lookup table, associated with the authorisation code in the form of the number NTR. The server 20 transmits the number NTR to the creditor instrument 10, which validates transition 105 at reception.

Step 106 is activated by validation of transition 105 for displaying the amount of payment and the number of transaction NTR on the screen 11 of the creditor instrument.

For carrying out the first embodiment of the method, an application named for example AFT is previously loaded in a mobile equipment like a cellular phone, a personal digital equipment (PDA) or any other mobile communicating device in possession of the customer who is the debtor. Typically, the application AFT is loaded in the mobile equipment after the customer has been registered in the database 25 so as to able the mobile equipment to work as a debtor instrument.

The application AFT executes computer readable instructions for implementing at least steps 302 and 304 of the method now described with further reference to Fig. 2.

From an initial step 300 wherein the debtor instrument 30 is idle on the watch, a transition 301 is validated when an application AFT is selected for example by a person typing specific key or keys on the keypad 32 or touching a specific symbol on the screen 31 or by any other way. Typically, the person is the customer using the debtor instrument when she or he wants to pay goods or a service.

Step 302 is activated by validation of transition 301 for displaying an AFT user interface requesting to enter the authorisation code, presently the number of transaction NTR, and the personal debtor code CIC.

From step 302, a transition 303 is validated when the application AFT receives the authorisation code and the personal debtor code CIC. The number of transaction is not transmitted by electronic or optronic communication means from the creditor instrument 10 to the debtor instrument 30 but exclusively by a physical person who sees the authorisation code in the form of the number of transaction on the screen 11 of the creditor instrument and who, for instance, types it on the keypad 32 of the debtor instrument. Because no hardware link, wired, radio or of any other nature, exists for enabling the application AFX to automatically communicate with the application AFT, there is no danger for a corrupted creditor instrument to tamper with the debtor instrument and reciprocally there is no danger for a corrupted debtor instrument to tamper with the creditor instrument. Security measures can therefore be considerably simplified on that point. The entering of the personal debtor code CIC together with the number of transaction NTR, ensures that the physical person is a rightful customer and that the allowed customer who sees at the same time the amount of payment, approves the amount of payment.

Step 304 is activated by validation of transition. 303 for authorising the payment service provider system to pay the amount, which the server 20 received by validation of transition 201. Therefore the authorisation code in the form of the number of transaction NTR is transmitted back to the server 20, together with the personal debtor code CIC. The application AFT builds a message M(NTR, CIC) containing the number NTR and the code CIC, preferably in a ciphered form. For example, the code CIC is used as a key for ciphering the number NTR. For example again, the number NTR and the code CIC are merged and hashed. Other possibilities can be envisaged without departing from the invention. The message M(NTR, CIC) is thereafter transmitted from the second node associated with the debtor instrument to the first node associated with the creditor instrument in such a way that the authorisation code includes the transaction identifying code NTR, independently of the amount of payment.

The A server 20 receiving the authorisation message M(NTR, CIC), validates transition 203.

Step 204 is activated by validation of transition 203 for verifying if the amount can be paid.

The payment service provider system analyses the received message and more particularly the source address of the message which is the unique node identifying code of the second node on the second network, for example the telephone number NAC of the debtor instrument on a cellular network. The payment service provider system checks if the unique node identifying code is registered in the database 25 as a valid identifying code of a duly registered customer. If not, the message is discarded. Before discarding the message, if the number of transaction is transmitted in clear without ciphering, the server 20 retrieves the address of the creditor instrument in the lookup table and sends the creditor instrument a response message indicating that the amount cannot be paid because the customer is not registered.

When the customer is registered, the payment service provider system checks if the personal debtor code CIC corresponds to the unique node identifying code, in other terms, if the personal debtor code CIC, which has been typed, corresponds to the rightful customer. Many schemes can be envisaged for the verification of the validity of the code CIC. For illustrative purpose only, the number NTR and the code CIC are transported un-ciphered in the payload field of the message and the node identifier in the header of the message, which is built by the application AFT. In another alternative, still for illustrative purpose only, the number NTR is transported enciphered by an algorithm for which the key is the personal debtor code CIC or an element derived from the code CIC and, which is shared by the application AFT and the payment service provider system.

When the received personal debtor code CIC is valid, the payment service provider system checks if the received number of transaction corresponds to an actual transaction for which no payment has already been done and in a reasonably short delay after the transaction identifying code NTR was emitted in step 202 (around ten seconds).

When all the preceding steps are positive, the payment service provider system gives order for a payment that the customer can assume in function of her or his financial profile.

When one of the verifications fails, the payment service provider system transmits a response message to the application AFX running on the creditor instrument 10 so far as the destination address of the creditor instrument 10 can be retrieved by the server 20. A simple way of realising that is to periodically scan every transaction identifying code in the lookup table and to declare that a transaction is terminated when no positive verification is detected after a predetermined period following the creation of the transaction identifying code in step 202. After the predetermined period the corresponding line of the lookup table is deleted. The destination address is the same as in step 202. The response message contains a report of the failing reasons.

When all the verifications succeed, the payment service provider system transmits the response message to the application AFX, containing an acknowledgement and the amount of payment. Here again, the corresponding line of the lookup table is destroyed so that the number NTR cannot be used for another payment.

The first embodiment is advantageous in terms of security because no reference of the registration of the customer in payment service provider system, is ever communicated to the creditor instrument, neither the private Customer Identification Code (CIC) nor any other value linked with a subscription of the customer.

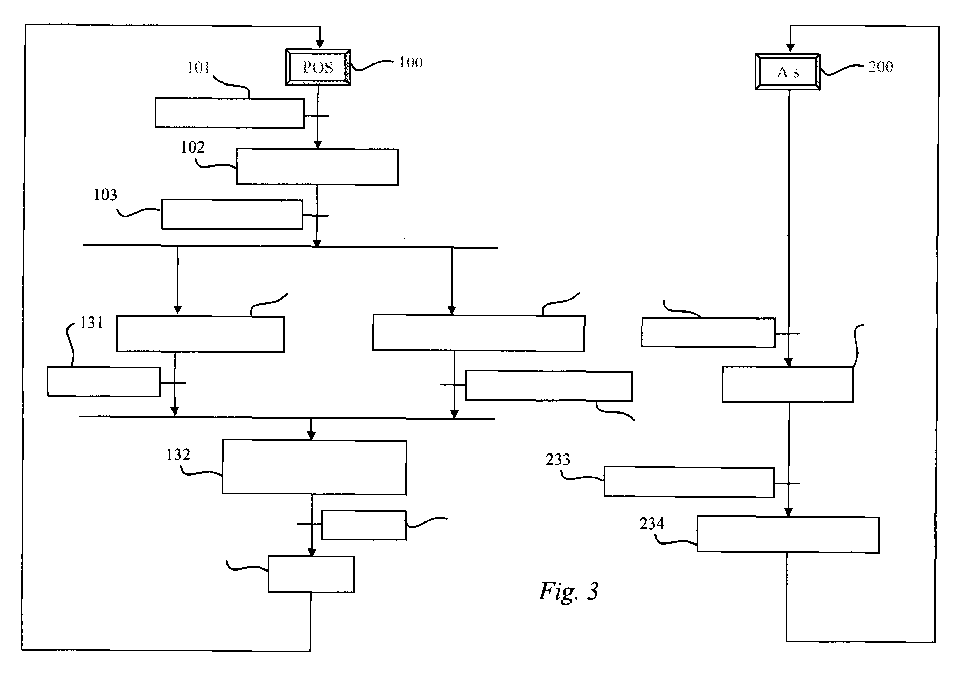

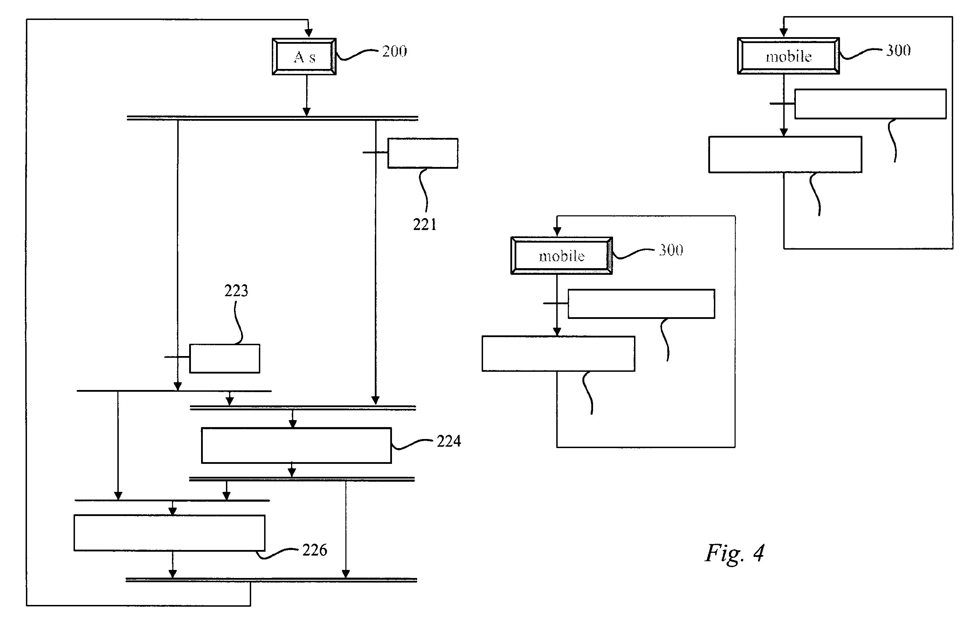

A second possible embodiment of the method according to the invention, is now described with reference to Figs. 3 and 4.

According to the variant provided by the second embodiment, the customer does not need to previously download any specific application in her or his mobile communicating equipment. She or he can use for example a standard cellular telephone. The customer only needs to previously obtain an authorisation code named for example NPA, which does not correspond to a specific transaction.

Referring to Fig. 3, any combination of steps 100 to 104 and 201 to 202 similar to the corresponding ones explained above with reference to Fig. 2, is possible.

Differently from the embodiment of Fig. 2, displaying step 106 is replaced by step 130, which is activated by validation of transition 103 in parallel with step 104, for displaying only the amount of payment. In step 130, the creditor instrument requests the entry of an authorisation code NPA on the keypad 12.

The authorisation code NPA is independently, and preferably before step 102 or 130, received by the physical person who is the debtor, i.e. the customer, in one of many ways comprising the following ways now explained with reference to figure 4.

In a first way, the customer instructs her or his debtor instrument 30 to transmit a Short Message Service (SMS) message to the server 20 by dialling a specific number or service. A transition 321, which is validated from initial step 300 by the ordered SMS, activates a step 322 wherein the SMS is sent the payment service provider system through the network 23 using a destination address based on the node identifying code of the first node associated with the payment service provider system and a source address based on the node identifying code NAC of the second node associated with the debtor instrument on the second network.

The reception of the SMS by the server 20, initially in step 200, validates a transition 221, which activates a step 224 wherein the payment service provider system tests if the node identifying code NAC refers to a dully registered customer in the database 25. When it is the case, the server 20 generates the authorizing code NPA, associated with a shelf life and sends the authorisation code NPA on the network 23 in an SMS having the address based on the node identifying code of the first node for source address and the address based on the node identifying code NAC for destination address.

The customer simply reads the SMS for having knowledge of the authorisation code NPA.

In an other way, the customer orders her or his debtor instrument 30 to call directly or indirectly an Interactive Voice Response (IVS) application hosted by the server 20 by dialling a specific telephone number. A transition 323, which is validated from initial step 300 by the ordered call, activates a step 324 wherein the call is signalled to the payment service provider system on the network 23 using the telephone number, which is a destination address based on the node identifying code of the first node associated with the payment service provider system and transmitting the telephone number, which is a source address based on the node identifying code NAC of the second node associated with the debtor instrument on the second network.

The reception of the call by the server 20, initially in step 200, validates a transition 223, which activates a step 226 wherein the payment service provider system tests if the node identifying code NAC refers to a dully registered customer in the database 25. When it is the case, the server 20 generates the authorisation code NPA, associated with a shelf life and sends the authorisation code NPA on the network 23 in a vocal form to the debtor instrument.

The customer simply listens to the voice message for having knowledge of the authorisation code NPA. Step 224 can also be activated in this second way.

From step 130, transition 131 is validated when the application AFX receives the authorisation code NPA and the personal debtor code CIC. The authorisation code NPA is not transmitted by electronic or optoelectronics communication means from the creditor instrument 10 to the debtor instrument 30 but exclusively by a physical person who previously obtained the authorisation code NPA and who, for instance, types it on the keypad 12 of the creditor instrument. Because no hardware link, wired, radio or of any other nature, exists for enabling the application AFX to automatically communicate with the debtor instrument, there is no danger for a corrupted creditor instrument to tamper with the debtor instrument and reciprocally there is no danger for a corrupted debtor instrument to tamper with the creditor instrument. Security measures can therefore be considerably simplified on that point. The entering of the personal debtor code CIC together with the authorisation code NPA, ensures that the physical person is a rightful customer and that the rightful customer who sees at the same time the amount of payment, approves the amount of payment.

Step 132 is activated by validation of transition 131 and of transition 105 for transmitting back the number of transaction NTR and the authorisation code NPA together with the personal debtor code CIC to the A server 20. A message M(NTR, NPA, CIC) is built by application AFX in a similar manner as the message M(NTR, CIC), which was built by application AFT in the first embodiment, comprising preferably ciphering.

The A server 20 receiving the authorisation message M(NTR, NPA, CIC), validates transition 233.

Step 234 is activated by validation of transition 233 for verifying if the amount can be paid.

The payment service provider system analyses the received message in a similar way as in step 204 of the first embodiment except some differences.

In the first embodiment, a link is directly established in the payment service provider system between the transaction and the debtor by retrieving the identity of the debtor from the source address of the message, which transmits the number of transaction, the source address being the unique node identifying code of the second node on the second network. Differently in the second embodiment, a link is firstly established in the payment service provider system between the transaction and a lookup table containing the authorisation code NPA and secondly completed up to the debtor by retrieving the identity of the debtor from the unique node identifying code of the second node, which is previously associated with the authorisation number NPA in the lookup table by execution of step 224 or 226. In other words, the cryptographic key or keys are accessed for deciphering actions, in step 204 by direct knowledge of the unique node identifying code of the message emitter node. Differently, the cryptographic key or keys are accessed for deciphering actions, in step 234 by knowledge of the authorisation code NPA which is previously associated with the unique emitter node identifying code of step 322 or 324.

In both cases, the consent or not on the transaction, results from analysing a correlation between the number of the transaction which is to be effected on the first network and the node identifying code of the debtor instrument on the second network.

The second embodiment is advantageous in terms of traffic fluidising in the front of the creditor instrument, particularly comprising a Terminal of Payment Equipment (TPE) on a POS.

It is not necessary to have a good radio coverage for the second network in the surroundings of the POS because the communication between the debtor instrument and the payment service provider system can be established in an other place.

The processing duration of the transaction is principally function of the transfer speed of the first network, which when it is a wired network is generally faster than a radio network. The communication between the debtor instrument and the payment service provider system can be established indeed before the transaction.

The second embodiment is also advantageous in terms of simplicity because every mobile phone or even a Plain Old Telephone Service (POTS) telephone can be used as debtor instrument for sending a SMS or calling the server 20, without necessity of downloading a program in the debtor instrument.

In the second embodiment, a shelf life is expected for the authorisation code NPA. The authorisation code NPA can also be limited in terms of use. In other words, an authorisation code NPA can be limited to one or to a predetermined maximal quantity of uses in a time window of the shelf life. Single usage with short shelf life supports the security. The authorisation code can also be limited in terms of amount of payment in a transaction, in a set of transactions or in a time window of the shelf life.

According to the safe practice, the payment service provider system may issue automatically a new authorisation code when the maximal quantity of uses is spent. This technique should conciliate security and ability to thread many successive actions of payment.

The two above described embodiments of the method and system can perfectly be used for paying purchases of services or of goods on the Internet. The hardware realisation of the creditor instrument 10 illustrated in Fig. 1 by a TPE or POS is replaced by the interface of payment WEB page on a merchant website. An ordinary merchant website downloads an AFX application from the payment service provider system, with the same functionalities as the AFX application oriented to a POS but hosted in a WEB server instead of a POS. The information which is typed by the customer on the keyboard of her or his computer, is ciphered in the computer by an applet of the AFX application before being transmitted to the Web server.

Because of the secure identification of the customer who is the debtor by the unique node identifying code of the debtor instrument as a source address for sending the message MN(NTR,CIC) in the first embodiment or as a destination address for receiving the authorisation code NPA in the second embodiment, many other uses of the method than only paying of goods and services, can be implemented.

The method and the system can be used for triggering a wire money to an account, which is managed by a bank or any third financial institution.

The method and the system can be used for cash withdrawals. When necessitated by the Regulation, the AFX interface displayed in step 102, requires the merchant to enter her or his personal creditor code CIA. The merchant can deliver cash to the customer when he receives approval of the bank of the customer by the response which validates transition 107.

The method and the system can be exploited for delivering vouchers, which are usable in the frame of other services. Two illustrative possible exploitations amongst others are given below.

In the field of prepaid mobile phones, operators usually propose refill vouchers at retail, which are each generally materialised by a pay-as-you-go code (PGC) number. The owner of a prepaid mobile phone purchases a voucher and communicates the code number to a specific operator server for topping up his mobile phone account. The payment service provider system of the invention can be arranged for obtaining a PGC number from the mobile phone operator by a back office link, debiting a mobile phone owner account, crediting an operator account with an amount, which is the price of the voucher, and communicating the PGC number to the mobile phone owner.

In the field of currency equivalent supply, some Internet applications need to manage secure funds flow for services providing, which is the case for on-line gambling, on-line casinos, etc.

Some difficulties could appear in case of a considerably high quantity of transactions occurring because a high size of the transaction identifying code NTR should be necessary for making sure of uniqueness during a certain period of time. A transaction identifying code having a too high size, more than six or eight digits, is not easy to use.

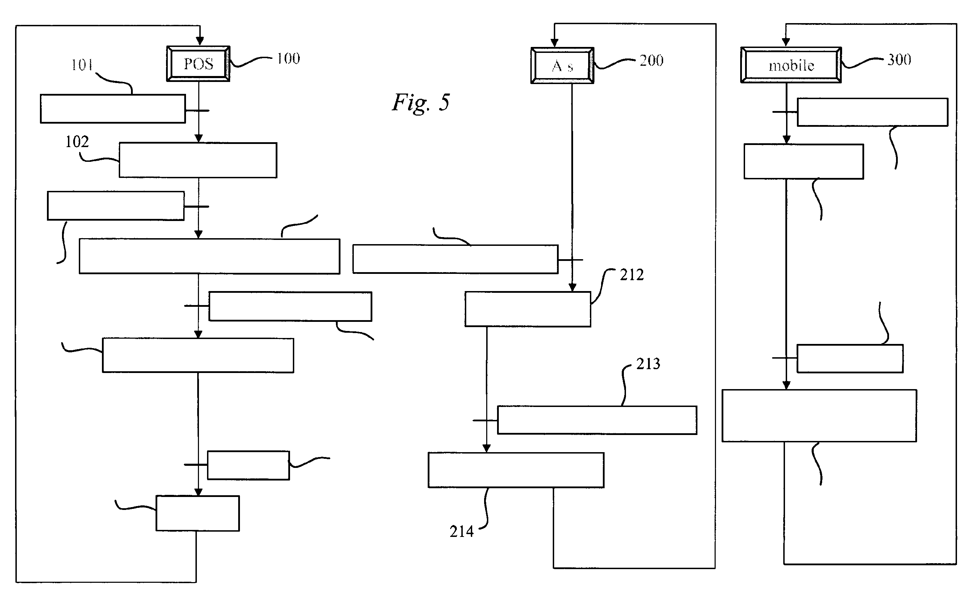

A third embodiment, now presented with reference to Fig. 5, allows to have a low size of transaction identifying code NTR, even when a high quantity of transactions occurs in the same period of time.

The third embodiment of the method, which is illustrated by Fig. 5, differs mainly by steps 212-214 instead of steps 202-204 in the server 20 and by step 312 instead of step 304 in the debtor instrument 30.

In step 212, the payment service provider system receiving the contract number NCA of the merchant and the amount of payment, generates a number of transaction NTR that is memorised in a data structure in association with a geographical area, which is occupied by the merchant. The generated number of transaction is a short number calculated in such a way that no other transaction can have the same number NTR in the area so long as the currently processed transaction is not terminated. For assuring a low quantity of transactions easily numbered by a short number NTR, the surface of the area is smaller for a usually higher quantity of transaction by the same merchant and other merchants in the same area.

Many mechanisms are possible for locating the area, which is attributed to the merchant.

The area can have a constant location, which is fixed when the merchant registered in the payment service provider system. In this case the contract number NCA indicates the location of the area. A bidirectional associative link between the contract number NCA and the located area permits to retrieve the area when receiving the contract number and to determine how many other merchants occupy the same area with other contract numbers NCA. For a fixed area associated with the contract number NCA, steps 100 to 108 of the third embodiment are the same as for the first embodiment. Particularly, step 110 represented in Fig. 5 is the same as step 104 represented in Fig. 2 because it is sufficient to transmit the contract number NCA and the amount of payment to the server 20 for generating a short number of transaction NTR which points to the correct transaction comprising a link between the amount of payment and the contract number NCA in the server 20.

The area can have a variable location, which is a function of the place where is the merchant, for example a hawker or a delivery man, during the transaction. In this case a parameter Loc(POS) indicating the location of the area is transmitted to the server 20 in step 110. The parameter Loc(POS) validates a transition 211, which is otherwise the same as transition 201 for activating step 212. For a variably located area associated with the contract number NCA, steps 100 to 108 of the third embodiment can be the same as for the first embodiment except step 110. In step 212, the present number of transaction NTR is calculated in function of other active numbers of transaction in the area determined by the received parameter LOC(POS).

In step 106, the customer sees a short number of transaction NTR, which is easy for him to type on the keypad 32 for validating transition 303 in the debtor instrument 30.

In step 214, the payment service provider system receiving the NTR and the CIC, retrieves the number of transaction NTR that is memorised in the data structure in association with the geographical area, wherefrom the NTR and the CIC were sent.

Many mechanisms are possible for locating the area, which is occupied by the customer, in other terms the location of the debtor instrument.

The location of the debtor instrument can be indicated by a parameter Loc(Mob) received in a message M(Loc(Mob),NTR,CIC) for validating transition 213. In this case, the application AFT is customised for executing step 312 activated by transition 303, so as to send the parameter Loc(Mob) to the server 20. The parameter Loc(Mob) can be determined by a GPS for example when the debtor instrument 30 is a communicating device in a car passing a toll booth on a highway. The parameter Loc(Mob) can be determined based on call and handover signalling for example when the debtor instrument 30 is a mobile phone in a cellular network. The location is in this later case the one of the cell wherein the mobile phone is located.

The location of the debtor instrument can be determined by the payment service provider system having access to rooting information on the second network. For example when the debtor instrument 30 is a mobile phone in a cellular network, the location of the cell wherein the mobile phone is communicating is real time traced in a current Visitor Location Register (VLR) and the current VLR is real time traced in a Home Location Register (HLR). For example again, the location of the debtor instrument 30 can be determined based on the location of a hotspot in the second network comprising a WiFi accessed network. It is not necessary to transmit the location of the debtor instrument 30 to the server 20 when it is possible to determine the location by the second network. In this case, step 312 can be the same as step 304 and a standard application AFT is compatible with the third embodiment too.

The mechanisms of the third embodiment permit to increase the quantity of possible transactions in a same period of time by discriminating the numbers of transactions NTR according to geographical zones, for example the cells of cellular network. More broadly, the third embodiment boots the security of the transactions because a transaction can only be validated when the debtor instrument is in the neighbourhood of the creditor instrument. The number of transaction NTR cannot be used for validating any other transaction outside of the neighbourhood of the creditor instrument and outside of the neighbourhood of the debtor instrument.

Other embodiments, uses and advantages of the present invention will be apparent to those skilled in the art from consideration of the specification and practice of the invention disclosed herein. The specification and examples should be considered exemplary only. The intended scope of the invention is only limited by the claims appended hereto.

## Claims

1. A method for processing a payment relating to a transaction between a debtor and a creditor, comprising a transaction displaying step for displaying at least an amount of payment and a transaction verifying step for transferring a response message between a creditor instrument and a payment service provider system on a first network, **characterised in that** it comprises:
- a transaction authorising step (304, 312, 224, 226) for transmitting an authorisation message between a first node associated with the payment service provider system and a second node associated with a debtor instrument on a second network wherein each node is separately and securely identified by a node identifying code, said authorisation message communicating an authorisation code; and **in that**:
- the response message is transferred in the transaction verifying step (204, 214, 234) from the payment service provider system to the creditor instrument when the payment service provider system receives at least the authorisation code in association with a debtor identifying code.

2. The method according to Claim 1, wherein:
- the transaction displaying step (106) is executed before the authorising step (304, 312) for further displaying a transaction identifying code;
- in the transaction authorising step (304, 312), the authorisation message is transmitted from the second node to the first node and the authorisation code includes the transaction identifying code.

3. The method according to Claim 1 or 2, wherein the authorisation code is generated by the payment service provider system after having received the amount of payment.

4. The method according to anyone of Claims 1 to 3, wherein the authorisation code and the debtor identifying code are entered in the debtor instrument by the debtor being informed of the amount of payment.

5. The method according to Claim 1, wherein the transaction authorising step (224, 226) is executed before the displaying step (130) and the authorisation message is transmitted from the first node to the second node.

6. The method according to Claim 5, wherein the authorisation code and the debtor identifying code are entered in the creditor instrument by the debtor being informed of the amount of payment.

7. The method according to anyone of Claims 1 to 6, wherein the authorisation code is generated by the payment service provider system after having received a request from the second node.

8. The method according to anyone of Claims 1 to 7, wherein the authorisation code is communicated in the authorisation message independently of the amount of payment.

9. The method according to anyone of preceding Claims, wherein accessibility to a creditor account is based on first information transmission by the first network, accessibility to a debtor account is based on second information transmission by the second network, and association between the creditor account and the debtor account is made in said first node of the second network by correlating said first and second information.

10. The method according to anyone of preceding Claims, wherein the first and second networks are operated by different operators and/or by different technological means.

11. The method according to anyone of preceding Claims, wherein the debtor instrument comprises a mobile telephone.

12. The method according to anyone of preceding Claims, wherein the creditor instrument comprises a point of sale.

13. The method according to anyone of Claims 1 to 11, wherein the creditor instrument comprises a Web server for displaying the amount of payment by the Internet.

14. The method according to anyone of preceding Claims, wherein the authorisation code is generated so as to be associated with a localisation of the creditor instrument and with a localisation of the debtor instrument and to be validated when the two localisations are in a same neighbourhood.

15. The method according to Claim 14, wherein the localisation of the debtor instrument is determined by the second network.
